# EUROPEAN PATENT SPECIFICATION

(11) **EP 1 488 695 B1**
(45) Date of publication and mention of the grant of the patent: **11.10.2006**
(21) Application number: 04102732.7
(22) Date of filing: 15.06.2004
(51) Int. Cl.: A01K 31/17

(54) **Improved coop for laying hens farming provided with a litter for scratching about and pecking**
Käfig für die Haltung von Legehennen mit Bereitstellung von Einstreu zum Kratzen und Picken
Cage configurée pour l'élevage des poules pondeuses avec litière pour gratter et picorer

(30) Priority: 20.06.2003 IT TO20030103 U
(43) Date of publication of application: 22.12.2004
(73) Proprietor: Valli International s.r.l., 47010 Galeata (FC) (IT)
(72) Inventor: Maltoni, Giuliano, 47010, Galeata (FC) (IT)
(74) Representative: Robba, Pierpaolo

(56) References cited:
- EP-A- 0 970 607
- EP-A- 1 308 088
- WO-A-93/23992
- US-A- 3 124 101
- US-A- 3 319 606

## Description

The present invention refers to an improved coop for laying hens farming provided with a litter for scratching about and pecking.

The applicant of the present utility model patent application is the applicant of a previous patent application, filed on November 5, 2001, at no. TO 2001 A 001046, relevant to a coop of the cited kind, to which the subject improvement makes reference.

The coop cited in the above-mentioned patent application is provided in particular with a litter that simultaneously allows the pecking for both cleaning and shortening the beak and the scratching about for shortening the claws. Said coop is further provided with nests for laying eggs.

However, in order to minimise breaks and dirty shell eggs the eggs laying nest must be as closer as possible to the eggs collecting belt that slides in parallel and adjacent to the manger; by positioning said nest on the manger side, a portion of the manger is lost.

It is the object of the present invention to allow the restoring of the manger portion that was lost with the installation of the eggs laying nests.

To this purpose the supply system of the litter material has been modified; and since feed or a mixture of inert fibres and feed is used as litter material, the litter distribution plate has been replaced with a two-faced secondary manger that allows said restoring.

Moreover, in case the litter material is not pecked by hens, it remains inside the manger and it is not uselessly wasted on the surface for scratching about and pecking.

These and other objects are generally achieved with the coop for the hens farming carried out according to the present invention, as claimed in the attached claims.

The invention will be now described in detail with particular reference to the enclosed figures, supplied by way of non-limiting example, in which:
figure 1 is a front view of a multi-storey coop for laying hens farming, provided with a two-faced manger according to the invention;
figure 2 is a sectional view of three different zones of the coop of figure 1; and

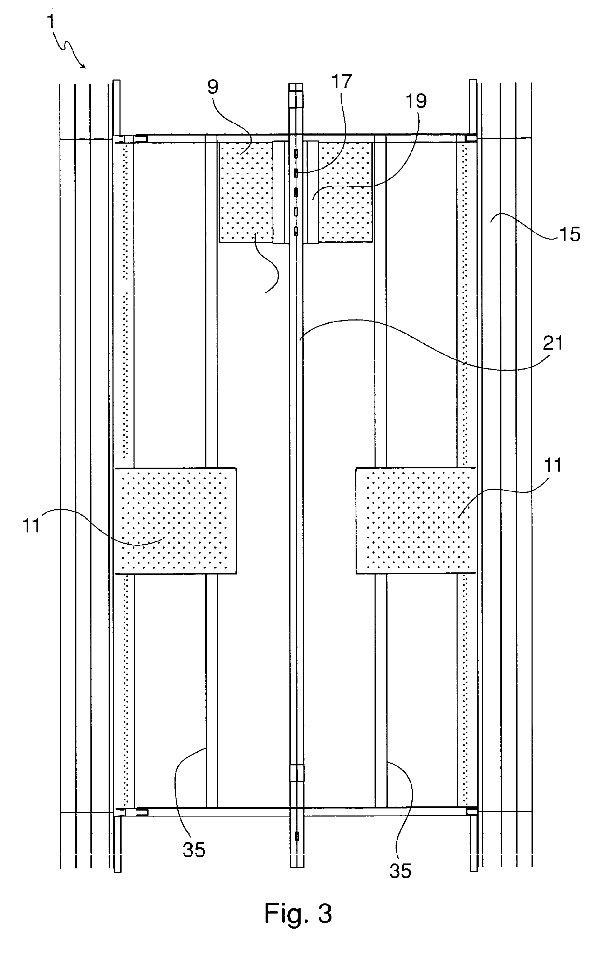

figure 3 is a top view of the inside of the coop of figure 1.

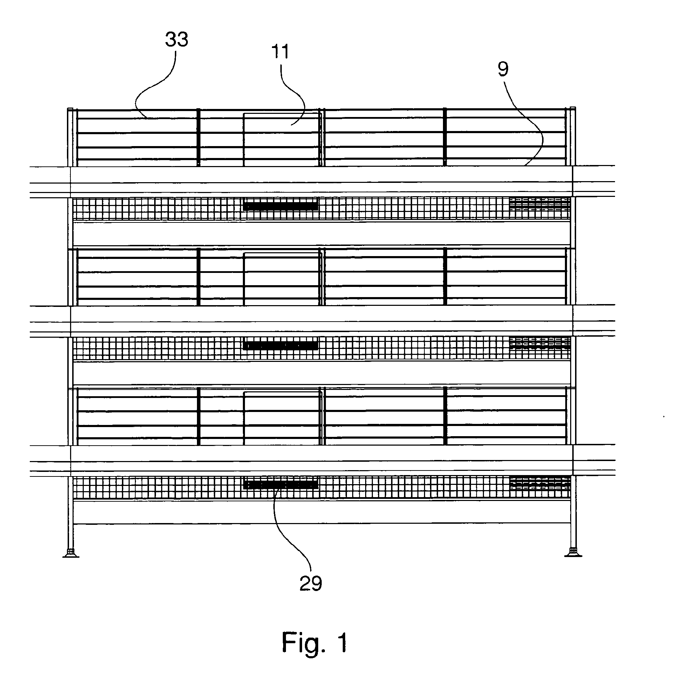

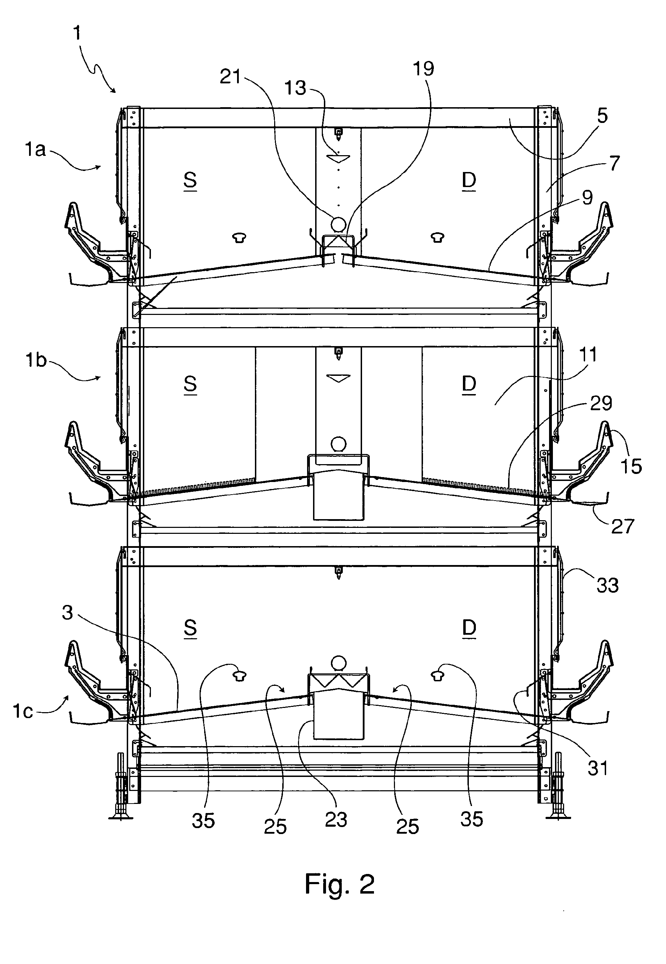

With reference to figures 1 and 2, a structure 1 for laying hens farming is composed of three superimposed coops 1a, 1b, 1c.

Said coops 1a, 1b, 1c are substantially identical.

Each coop 1a, 1b, 1c is provided with a bottom grid 3, made up of a rectangular mesh net, a roof 5 and side walls 7, which define an inner space freely accessible to the animals therein farmed.

Each coop 1a, 1b, 1c is ideally subdivided into two equal and symmetrical internal volumes S and D, each one provided with a surface for scratching about and pecking 9, for instance consisting of a metallic tray, a tile of stone or "cotto" or a similar material, synthetic grass or abrasive material, and with a nest 11 for laying eggs; optionally a net dividing wall 13 can be provided that separates said two volumes.

Laterally, on each side of the coop a main manger 15 and an eggs carrying belt 27 are provided.

Figure 2 shows in detail, in section, three different zones of the superimposed coops 1a, 1b, 1c realised according to the invention. In particular, from above downwards, the zone equipped with the two-faced secondary manger 19 placed in correspondence with said surface for scratching about and pecking 9, the zone equipped with the laying nest 11, and a free zone of the coop are visible.

Advantageously, said manger 19 extends for a length equal to the length of the main manger 15 portion occupied by nests 11 so that each coop 1a, 1b, 1c has in all a manger extension identical to that of a coop without nests 11.

In particular, in the upper coop of figure 2, over the two-faced secondary manger 19, which is substantially situated at the same height of the main manger, the feed carrying tube 21 provided with slots 17 is visible, said tube longitudinally going round the whole coop 1a, 1b, 1c and also serving as hens perch.

Additional perches that longitudinally go round inside the coops 1a, 1b, 1c in figures have been designated with the numeral 35.

Still in figure 2, in the lower coops 1b and 1c, the poultry droppings drying tube 23 is visible longitudinally going round the whole coop too, between the two floor slopes 25 (1c) made up of an electrowelded rectangular mesh net and inclined of about 7° for the eggs rolling onto the collecting belt 27.

In the coop 1b, the nests 11 internal portion of said slopes 25 is visible, said slopes being advantageously covered with a mat 29 of synthetic grass or rubber or plastics to facilitate the eggs laying operation.

In the coop 1c a holed metal strip 31 is further visible; it originally serves as protection for the eggs lying on the belt 27 as well as excrements deflector. Indeed, the holes of said strip serve for shortening the hens claws.

The coops 1a, 1b, 1c are further provided with a sliding trough 33, on both sides.

The secondary manger 19 bottom can be made abrasive with filling materials of tungsten carbide or the like to shorten the hens beak and to prevent in a natural way the problems caused by the mutual aggressiveness of the animals.

## Claims

1. A coop (1) for laying hens farming provided with a litter for scratching about and pecking, substantially consisting of a bottom grid (3), made up of a rectangular mesh net, a roof (5) and side walls (7), which define an inner space freely accessible to the animals therein farmed; said coop being ideally subdivided into two equal and symmetrical internal volumes (D, S), each one provided with a surface for scratching about and pecking (9) and with a nest (11) for laying eggs; laterally, on each side of the coop a main manger (15) and an eggs carrying belt (27) being provided, **characterised in that** it is equipped with a two-faced secondary manger (19), provided near the coop centre line (1a) under the feed carrying tube (21).

2. A coop (1) according to claim 1, **characterised in that** said two-faced manger (19) is placed in correspondence with said surface for scratching about and pecking (9).

3. A coop (1) according to claim 1, **characterised in that** said two-faced manger (19) extends for a part of length substantially equal to the part of main manger occupied by said nests (11).

4. A coop (1) according to claim 1, **characterised in that** laterally to the poultry droppings drying tube (23) that longitudinally goes round the whole coop, two floor slopes (25) made up of an electrowelded rectangular mesh net and inclined of about 7° are provided for the eggs rolling onto the collecting belt (27).

5. A coop (1) according to claim 4, **characterised in that** in correspondence with said nests (11) said slopes (25) are covered with a mat (29) of synthetic grass or rubber or plastics to facilitate the eggs laying operation.

6. A coop (1) according to anyone of the preceding claims, **characterised in that** said coop is equipped with a holed metal strip (31), originally provided as protection for the eggs lying on the collecting belt (27) as well as excrements deflector; while the holes of said strip (31) are provided for shortening the hens claws.

7. A coop (1) according to anyone of the preceding claims, **characterised in that** the two-faced manger (19) bottom can be made abrasive with filling materials of tungsten carbide or the like to shorten the hens beak and to prevent in a natural way the problems caused by the mutual aggressiveness of the animals.

8. A coop (1) according to anyone of the preceding claims, **characterised in that** it comprises a longitudinal net dividing wall (13) that divides said two equal and symmetrical internal volumes.

## Patentansprüche

1. Käfig (1) für die Haltung von Legehennen mit Bereitstellung von Einstreu zum Kratzen und Picken, der im Wesentlichen aus einem Bodengitter (3) aus rechteckigem Maschendraht besteht, einem Dach (5) und Seitenwänden (7), die einen frei zugänglichen Innenraum zu den darin gehaltenen Hennen bilden, wobei jener Käfig im Idealfall in zwei gleiche und symmetrische innere Kammern (D, S) unterteilt ist, die jeweils mit einer Oberfläche zum Herumkratzen und Picken (9) und einem Nest (11) zur Eiablage versehen ist; an jeder Käfigseite ist ein Hauptfuttertrog (15) sowie ein Eiertransportband (27) vorgesehen,
**dadurch gekennzeichnet, dass** er mit einem doppelseitigen zweiten Futtertrog (19) ausgestattet ist, der in der Nähe der Mittellinie des Käfigs (1a) unterhalb des Futterförderrohrs (21) vorgesehen ist.

2. Käfig (1) nach Anspruch 1,
**dadurch gekennzeichnet, dass** jener doppelseitige Futtertrog (19) in Verbindung mit der Oberfläche zum Herumkratzen und Picken (9) angeordnet ist.

3. Käfig (1) nach Anspruch 1,
**dadurch gekennzeichnet, dass** jener doppelseitige Futtertrog (19) sich in einem Längenbereich erstreckt, der im Wesentlichen jenem Bereich des Hauptfuttertrogs gleich ist, der von den Nestern (11) eingenommen wird.

4. Käfig (1) nach Anspruch 1,
**dadurch gekennzeichnet, dass** seitlich des Hühnermisttrockenkanals (23), der die Länge des gesamten Käfigs durchläuft, zwei geneigte Böden (25) aus elektro-geschweißtem rechteckigen Maschendraht, um etwa 7° geneigt, vorgesehen sind, um die Eier auf das Sammelband (27) rollen zu lassen.

5. Käfig (1) nach Anspruch 4,
**dadurch gekennzeichnet, dass** im Zusammenhang mit den Nestern (11) die Schrägen (25) mit einer Matte (29) aus synthetischem Gras oder Gummi oder Kunststoff bedeckt sind, um den Eierlegeprozess zu erleichtern.

6. Käfig (1) nach einem der vorhergehenden Ansprüche,
**dadurch gekennzeichnet, dass** jener Käfig mit einem Lochblechstreifen (31) ausgerüstet ist, der ursprünglich als Schutz für die auf dem Sammelband (27) liegenden Eier wie auch als Exkrementabweiser vorgesehen ist, während die Löcher jenes Streifens (31) zum Kürzen der Hühnerklauen vorgesehen sind.

7. Käfig (1) nach einem der vorhergehenden Ansprüche,
**dadurch gekennzeichnet, dass** der Boden des doppelseitigen Futtertrogs (19) mit Füllstoffen wie Wolframkarbid oder Ähnlichem schmirgelartig ausgebildet werden kann, um die Schnäbel der Hennen zu kürzen und auf natürliche Weise die durch die gegenseitige Aggressivität der Tiere verursachten Probleme zu verhindern.

8. Käfig (1) nach einem der vorhergehenden Ansprüche,
**dadurch gekennzeichnet, dass** er eine langgestreckte Netztrennwand (13) aufweist, die die beiden gleichen und symmetrischen inneren Kammern trennt.

## Revendications

1. Cage (1) destinée à l'élevage de poules pondeuses dotée d'une litière pour gratter et picorer, constituée essentiellement d'une grille de fond (3), faite d'un grillage rectangulaire, d'un toit (5) et de parois latérales (7), lesquels définissent un espace intérieur librement accessible aux animaux qui y sont élevés ; ladite cage étant subdivisée de façon idéale en deux volumes internes égaux et symétriques (D, S), chacun étant pourvu d'une surface pour gratter et picorer (9) et d'un nid (11) pour pondre des oeufs ; une mangeoire principale (15) et une bande convoyeuse destinée aux oeufs (27) étant prévues latéralement, sur chaque côté de la cage, **caractérisée en ce qu'**elle est équipée d'une mangeoire secondaire à deux côtés (19), fournie à proximité de la ligne centrale de la cage (1a) sous la canalisation de transport de l'aliment (21).

2. Cage (1) selon la revendication 1, **caractérisée en ce que** ladite mangeoire à deux côtés (19) est placée en correspondance avec ladite surface pour gratter et picorer (9).

3. Cage (1) selon la revendication 1, **caractérisée en ce que** ladite mangeoire à deux côtés (19) s'étend sur une partie de la longueur essentiellement égale à la partie de mangeoire principale occupée par lesdits nids (11).

4. Cage (1) selon la revendication 1, **caractérisée en ce que** latéralement au tube de séchage des fientes des volailles (23) qui court sur la totalité de la longueur de la cage, deux surfaces de plancher en pente (25) constituées d'un grillage rectangulaire soudé électriquement, et inclinées de 7° environ, sont prévues pour que les oeufs roulent sur la bande collectrice (27).

5. Cage (1) selon la revendication 4, **caractérisée en ce que** en correspondance avec lesdits nids (11) lesdites pentes (25) sont couvertes d'un matelas (29) d'herbe synthétique ou de caoutchouc ou de matière plastique en vue de faciliter l'opération de ponte des oeufs.

6. Cage (1) selon l'une quelconque des revendications précédentes, **caractérisée en ce que** ladite cage est dotée d'une bande métallique à trous (31), prévue initialement comme une protection pour les oeufs reposant sur la bande collectrice (27) de même que comme élément déflecteur d'excréments ; alors que les trous de ladite bande (31) sont prévus pour user les griffes des poules.

7. Cage (1) selon l'une quelconque des revendications précédentes, **caractérisée en ce que** le fond de la mangeoire à deux faces (19) peut être rendu abrasif par des matériaux de remplissage à base de carbure de tungstène ou analogue afin d'user le bec des poules et d'empêcher de façon naturelle les problèmes provoqués par l'agressivité mutuelle des animaux.

8. Cage (1) selon l'une quelconque des revendications précédentes, **caractérisée en ce qu'**elle comporte une paroi de séparation grillagée longitudinale (13) qui sépare les deux dits volumes internes égaux et symétriques.
